# EUROPÄISCHE PATENTSCHRIFT

(11) **EP 0 470 542 B1**
(45) Veröffentlichungstag und Bekanntmachung des Hinweises auf die Patenterteilung: **23.11.1994**
(21) Anmeldenummer: 91113115.9
(22) Anmeldetag: 05.08.1991
(51) Int. Cl.: F16H 57/04, F16C 33/80, F16C 33/76

(54) **Getriebe mit Schmierölzufuhr zum Welleninneren**
Transmission with feeding of lubricating oil to the centre of a shaft
Transmission avec alimentation d'huile lubrifiante à l'intérieur d'un arbre

(30) Priorität: 10.08.1990 DE 4025445
(43) Veröffentlichungstag der Anmeldung: 12.02.1992
(73) Patentinhaber: STEYR-DAIMLER-PUCH AKTIENGESELLSCHAFT, 1010 Wien (AT)
(72) Erfinder: Gartner, Helfried, A-3321 Ardagger (AT); Wöntner, Gebhard, Ing., A-4493 Wolfern (AT); Zwirn, Rudolf, A-4522 Sierning (AT)

(56) Entgegenhaltungen:
- EP-A- 0 058 968
- DE-A- 3 902 172
- US-A- 3 042 463
- US-D- 3 537 725

## Beschreibung

Die Erfindung handelt von einem Getriebe, in dessen Gehäuse Wellen mit Zahnrädern angeordnet sind, wobei mindestens eine Welle eine axiale Schmierölbohrung aufweist, der das Schmieröl an einer Wellenstirnseite aus einer mit Drucköl gespeisten Kammer zugeführt wird und wobei die Kammer zumindest teilweise im Gehäuse ausgebildet ist. Ein solches Getriebe ist aus der EP-A-58 968 bekannt.

In Getrieben besteht vielfach die Notwendigkeit, drehenden Wellen Öl zuzuführen, sei es zur intensiven Schmierung der Zahnräder, sei es zur Speisung von Lamellenkupplungen oder Schaltzylindern, sei es zur Schmierung von Schaltmuffen oder Synchronisiervorrichtungen.

Bei bekannten gattungsgemäßen Ölzuführungen erfolgt die Ölzufuhr entweder nur durch Fliehkraft aufgrund der Rotation der Welle, der das Schmieröl etwa durch ein in das Welleninnere ragendes Rohr zugeführt wird, oder durch den von einer Ölpumpe erzeugten Öldruck in einer Kammer, die von der Stirnfläche der hohlen Welle begrenzt ist und gegenüber dieser, etwa mittels eines Rechteckringes, abgedichtet ist.

Bei ersterer Bauart sind nur geringe Drucke und Fördermengen möglich, sodaß sie nicht brauchbar sind, wenn besonders intensive Schmierung oder Schmierung mit höherem Druck, beispielsweise von Synchronisiereinrichtungen, benötigt werden. Bei der Druckölzufuhr von einer Pumpe ist hingegen eine aufwendige Dichtung zwischen Welle und Gehäuse erforderlich, die Reibung und Verschleiß bringt und außerdem ein Überdruckventil erfordert, das aufwendig ist und im Getriebeinneren viel Platz benötigt.

Dieser letztere Nachteil ist besonders störend in Anwendungsfällen, bei denen die erforderliche Ölmenge oder der erforderliche Öldruck zwischen diesen Extremen liegen und man sich der aufwendigeren Konstruktion bedienen muß, ohne sie voll auszunutzen. Das ist beispielsweise bei der Schmierung von Synchronisiervorrichtungen der Fall.

Diese brauchen einen kräftigen Schmierölstrom, der jedoch einen bestimmten definierten Druck nicht überschreiten darf. Hier ist der vermehrte Platzbedarf des Druckbegrenzungsventiles besonders störend.

Es ist daher Aufgabe der Erfindung, die Ölzufuhr bekannter Getriebe so zu verbessern, daß mit minimalem technischen Aufwand und zu geringsten Kosten eine Druckölzufuhr mit ausreichendem Druck und möglichst genauer und zuverlässiger Druckbegrenzung möglich ist.

Erfindungsgemäß wird das dadurch erreicht, daß die Kammer durch ein die Welle tragendes Wälzlager und eine an der der Kammer abgewandten Seite des Wälzlagers angebrachte Federscheibe begrenzt ist, die am inneren Wälzlagerring dicht anliegt und deren äußerer Rand sich federnd an den Außenring des Wälzlagers anlegt.

Die elastische Federscheibe ist ein ganz billiges Teil, das auch keinen Platz in Anspruch nimmt, sie wirkt gleichzeitig als Abdichtungs- und als Druckbegrenzungselement. Der beim erlaubten Druck am äußeren Wälzlagerring anliegende äußere Rand verursacht nur minimale Reibung. Bei Überschreiten des zulässigen Druckes wird sein Rand vom Wälzlageraußenring weggedrückt, sodaß Öl durch das Wälzlager hindurch und durch den so entstehenden Spalt zwischen Wälzlageraußenring und Scheibenrand hindurch in den Ölsumpf abfließen kann. Dadurch, daß die Federscheibe praktisch reibungsfrei und gleichzeitig als Abdichtungs- und Druckfühlelement wirkt, erreicht man einen sehr gleichmäßigen Druckverlauf.

Die Federscheibe besteht vorzugsweise aus gehärtetem Stahlblech, dadurch sind bei geringer Scheibendicke auch höhere Drucke möglich.

In weiterer Ausgestaltung der Erfindung ist an der dem Wälzlager abgewandten Seite der Federscheibe noch ein Stützring angeordnet. Dieser verbessert die Anlage der Federscheibe am Wälzlagerinnenring und kann durch Variation des Durchmessers bei unveränderter Federscheibe zur Einstellung von deren Ansprechdruck verwendet werden.

In weiterer Ausgestaltung der Erfindung ist die Federscheibe in ihrem äußeren Bereich ausgebaucht und liegt mit ihrer Stirnkante am Außenring des Wälzlagers an. Dadurch sind Reibung und Verschleiß besonders gering. Solche Scheiben sind außerdem unter den Namen NILOS-Ring (geschütztes Warenzeichen der Firma Nilos) preiswert im Handel erhältlich und zur Abdichtung von fettgeschmierten Wälzlagern weitverbreitet.

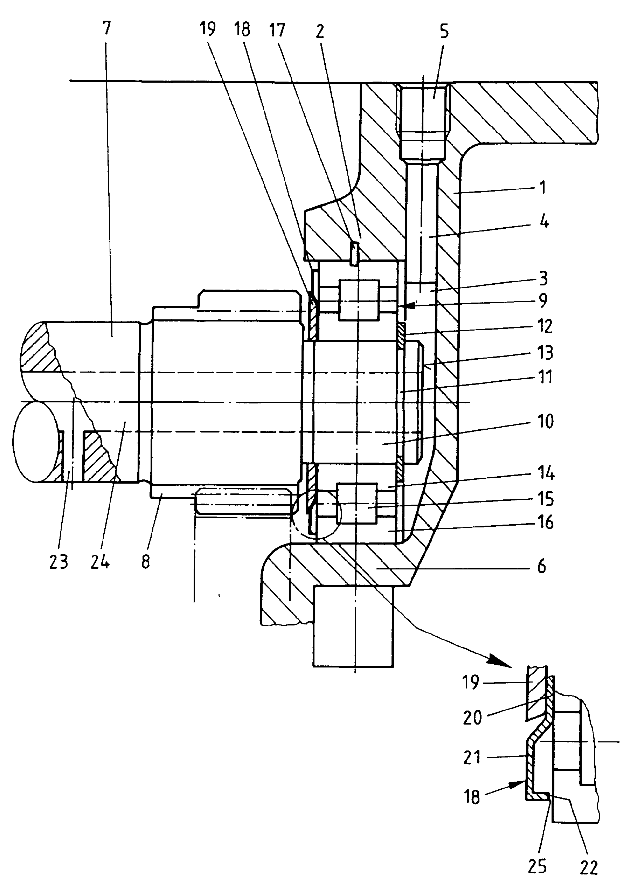

Im folgenden wird die Erfindung an Hand einer einzigen Figur, die ein Ausführungsbeispiel und ein Detail daraus darstellt, beschrieben.

Das mit der erfindungsgemäßen Vorrichtung ausgestattete Getriebe ist nur durch eine Stirnwand 1 angedeutet, in der Lagersitze 2,6 zur Aufnahme von Wellenlagern und eine Kammer 3 ausgebildet sind. In der Stirnwand 1 verläuft, ausgehend von einem Anschlußgewinde 5 zur Aufnahme eines nicht dargestellten Zufuhrrohres, ein Kanal 4, durch den das Schmieröl unter Druck zugeführt wird. Eine Welle 7 mit einer axialen Bohrung 24 ist auch nur teilweise dargestellt. Dieser Teil der Welle weist ein Zahnrad 8 und einen Wellenzapfen 10 auf. Der Wellenzapfen 10 bildet eine der Kammer 3 zugewandte Stirnfläche 13 und ist mit einer Nut 11 zur Aufnahme eines Sicherungsringes 12 versehen, mit dem der Innenring 14 des Wälzlagers 9 gesichert ist. Das Lager 9 ist als Rollenlager ausgebildet, es könnte sich aber auch um ein beliebiges anderes Wälzlager handeln. Es besteht weiters aus Wälzkörpern 15 und einem Außenring 16, der beispielsweise mittels eines Sicherungsstiftes 17 im Lagersitz 2 positioniert ist.

Zwischen dem Wälzlager 9 und dem Zahnrad 8 ist, vom Wälzlager her gesehen, zuerst eine Federscheibe 18 und dann dahinter gegebenenfalls ein Abstützring 19 vorgesehen, die beim Aufpressen des Wälzlagerinnenringes 14 drehfest mit diesem und daher mit der Welle verbunden werden.

Die Federscheibe 18 besteht beispielsweise aus gehärtetem Stahl, ihr innerer Teil 20 liegt am Wälzlagerinnenring 14 an, ihr äußerer Teil 21 bildet eine Ausbauchung, die in einer dem Wälzlageraußenring 16 zugekehrten Stirnkante 22 endet. Diese Stirnkante 22 wird mit geringer Kraft an den Wälzlageraußenring 16 gepreßt. Da die Stirnkante 22 nur schmal ist, ist daher auch die Reibung sehr gering.

Hinter der Federscheibe 18 kann ein Abstützring 19 angeordnet sein, der den inneren Bereich der Federscheibe 18 gegen den Innenring 14 des Wälzlagers preßt. Je nach dem Außendurchmesser dieses Abstützringes 19 ist eine mehr oder weniger große Fläche des Außenteiles 21 der Federscheibe 18 nicht unterstützt und kann daher ab einem gewissen Innendruck zurückfedern.

In der nur teilweise dargestellten Welle 7 ist eine zentrische Schmierölbohrung 24 vorgesehen, die über eine oder mehrere Radialbohrungen 23 die nicht dargestellten Schmierstellen mit Öl versorgt.

Die Arbeitsweise der erfindungsgemäßen Vorrichtung ist die folgende: Der von einer nicht dargestellten Ölpumpe oder einer anderen Druckquelle kommende Schmierölstrom tritt über den Kanal 4 in die Kammer 3 ein. Der Druck in dieser Kammer 3 bestimmt die den Schmierstellen zugeführte Ölmenge und deren Druck. Solange der Druck in dieser Kammer unter einem bestimmten Grenzwert liegt, liegt die Stirnkante 22 der Federscheibe 18 am Außenring 16 des Wälzlagers 9 an, sodaß die Kammer 3, vom Zuflußkanal 4 und der Schmierölbohrung 24 abgesehen, geschlossen ist.

Überschreitet der Druck in der Kammer 3 einen bestimmten, durch die Dimensionierung der Federscheibe 18 und gegebenenfalls des Abstützringes 19 bestimmten Druck, so hebt die Stirnkante 22 der Federscheibe 18 vom Außenring 16 des Wälzlagers ab und Schmieröl kann an den Wälzkörpern 15 vorbei durch den Spalt 25, der sich über den gesamten Umfang erstreckt, abfließen, siehe Detail.

Die beschriebene Ausführungsform ist nur ein Beispiel, von dem in mannigfacher Weise abgewichen werden kann. So kann die Kammer beliebig ausgebildet und geformt sein, die Ölzufuhr zu dieser Kammer auch von außen oder von innen erfolgen. Schließlich kann auch das Getriebe ein beliebiges Getriebe sein und eine oder mehrere hohle Wellen enthalten, wobei eine oder mehrere Wellen die verschiedensten intensiv mit Öl zu versorgenden Maschinenelemente tragen können.

## Patentansprüche

1. Getriebe, in dessen Gehäuse (1) Wellen (7) mit Zahnrädern (8) angeordnet sind, wobei mindestens eine Welle (7) eine axiale Schmierölbohrung (24) aufweist, der das Schmieröl an einer Wellenstirnseite (13) aus einer mit Drucköl gespeisten Kammer (3) zugeführt wird und wobei die Kammer zumindest teilweise im Gehäuse ausgebildet ist, **dadurch gekennzeichnet,** daß die Kammer (3) durch ein die Welle tragendes Wälzlager (9) und eine an der der Kammer (3) abgewandten Seite des Wälzlagers (9) angebrachte Federscheibe (18) begrenzt ist, die am inneren Wälzlagerring (14) dicht anliegt und deren äußerer Rand sich federnd an den Außenring (16) des Wälzlagers anlegt.

2. Getriebe nach Anspruch 1, **dadurch gekennzeichnet**, daß die Federscheibe (18) aus gehärtetem Stahlblech besteht.

3. Getriebe nach Anspruch 1, **dadurch gekennzeichnet**, daß hinter der Federscheibe (18) ein Stützring (19) angeordnet ist.

4. Getriebe nach Anspruch 3, **dadurch gekennzeichnet**, daß die Federscheibe (18) in ihrem außeren Bereich (21) ausgebaucht ist und mit ihrer Stirnkante (22) am Außenring (16) des Wälzlagers anliegt.

## Claims

1. Gear unit comprising a casing (1) wherein shafts (7) with gear wheels (8) are arranged, at least one shaft (7) having an axial lubricating oil bore (24) to which the lubricating oil is fed from a chamber (3) supplied with pressurized oil to a face (13) of the shaft, the chamber being formed at least in part by the casing, **caracterised** in that the chamber (3) is occluded by an antifriction bearing (9) supporting the shaft and by a disk spring (18) arranged on the side of the antifriction bearing (9) opposite the chamber (3), the disk spring (18) sitting close to the inner race (14) of the antifriction bearing and its outer rim resting resiliently against the outer race (16) of the antifriction bearing.

2. Gear unit according to claim 1, **caracterised** in that the disk spring (18) consists of hardened sheet steel.

3. Gear unit according to claim 1, **caracterised** in that a backing ring (19) is arranged behind the disk spring (18).

4. Gear unit according to claim 3, **caracterised** in that the outer region (21) of the disk spring (18) is bulging outwards and its front edge (22) rests against the outer race (16) of the antifriction bearing.

## Revendications

1. Transmission dont le boitier (1) comporte des arbres (7) avec des roues dentées ()8), au moins un arbre (7) étant pourvu d'un alésage axial (24) d'huile lubrifiante auquel l'huile est acheminée par une face frontale (13) de l'arbre à partir d'une chambre (3) alimentée en huile sous pression, la chambre étant formée au moins partiellement dans le boitier, **caractérisé** en ce que la chambre (3) est délimitée par un roulement (9) portant l'arbre et par un disque ressort (18) disposé du coté du roulement (9) opposé à la chambre (3), le disque ressort (18) étant joint étanchement à la bague intérieure (14) du roulement et son bord extérieur portant élastiquement sur la bague extérieure (16).

2. Transmission selon la revendication 1, **caractérisé** en ce que le disque ressort (18) consiste en tôle d'acier trempé.

3. Transmission selon la revendication 1, **caractérisé** en ce que une bague d'appui (19) est disposée derrière le disque ressort (18).

4. Transmission selon la revendication 3, **caractérisé** en ce que la partie extérieure (21) du disque ressort (18) est emboutie et son arête frontale (22) porte sur la bague extérieure (16) du roulement.
